# EUROPEAN PATENT APPLICATION

(11) **EP 1 209 842 A1**
(43) Date of publication of application: **29.05.2002**
(21) Application number: 01000536.1
(22) Date of filing: 12.10.2001
(51) Int. Cl.: H04L 7/033

(54) **Phase selection method in a receiver**

(30) Priority: 17.10.2000 US 690556
(71) Applicant: Texas Instruments Inc., Dallas, Texas 75251 (US)
(72) Inventor: PATKI, Abhijit, Bangalore (IN)
(74) Representative: Holt, Michael

(57) **Abstract**

A data recovery circuit (110, 210) and method (170, 270) in which shrunk bits are located (174, 274) and analyzed to determine the optimum recovery phase for recovering data from a data stream. Shrunk bits are counted excluded by each phase (176), and the shrunk bits counts are compared to determine the phase with the minimum count (178). Alternatively, shrunk bit centers are located (276), and the average shrunk bit center position is selected as the best recovery phase (278). The data recovery circuit (110, 210) includes a logic circuit (113, 213), filter (118, 218) and a multiplexer (120, 220).

## Description

### TECHNICAL FIELD OF THE INVENTION

This invention relates generally to serialized data transmission, and more particularly to high-speed data recovery using over-sampling techniques.

### DESCRIPTION OF THE RELATED ART

High-speed digital data transmission is one of the key enabling technologies of the future. There are a variety of ways to recover data from a serialized high-speed data stream. An over-sampling technique is one such widely used method. Once the high-speed data is over-sampled, an intelligent real time circuit is required to decide, with a low bit-error rate, which of the samples represents the transmitted data. Typical approaches in recovery of data from over-sampled streams find the average location of transitions and output the data sampled by the phase that is farthest from the average transition position.

In high-speed data transmission, an eye diagram is often used to represent the timing of the high-speed data with respect to an absolute clock. Unless the clock can be recovered from the data, a clock signal is transmitted to be used to latch-in the data. However, when the interface cable length and hence the skew between the clock and data at the receiver end is large, it is not possible to specify a timing relationship, for example, the setup and hold time, between the clock and the data. This is the case for the Digital Visual Interface (DVI) which is a standard that specifies the interface between a desktop computer and an LCD monitor.

The DVI interface may use cables having lengths of up to 10 meters. The DVI interface also involves very high speed (up to 1.65 Gbps) serialized transmission of digital data over four differential twisted pairs, which are received and decoded by the receiver and displayed on the flat-panel monitor. With DVI, the clock cannot be recovered reliably from the data because the data is transition-minimized encoded to reduce electro-magnetic interference (EMI). Hence, the clock cannot be used to sample the data directly. Therefore, the data is over-sampled to get many samples from each bit so that at least one sample is taken from the eye-opening region. Thus, the problem is to find the data sample that was obtained from the eye-opening region.

The minimum eye opening specification of the DVI is 40% of the bit time, for example, 240 ps when the data rate is 1.65Gbps. Allowing 15% of the bit time for clock jitter, finite rise time and other miscellaneous effects, the spacing between phases may be 25% of the bit time, so that at least one sample is taken from the eye-opening region, resulting in 4x over-sampling being used. A number of phases, for example, four, represented by A, B, C, D may be used to over-sample the data. Out of these, if the phase that hits the eye opening is discovered, the sample generated using this clock phase is the correct one.

A problem with prior art high data rate recovery methods and circuits is high bit error rates caused by recovering data in the wrong phase. What is needed in the art of high data transmission is a circuit and method for determining the optimum phase of coincident with the eye opening, to achieve data recovery with a low bit error rate.

### SUMMARY OF THE INVENTION

The present invention provides a circuit and method for recovering data from a serialized high-speed data stream. The data stream is over-sampled, and shrunk bits in the data stream are located and analyzed to select the recovery phase. In the preferred embodiment, only shrunk bits are examined. These bits are more prone to errors due to use of an incorrect phase to output the data. The phase that intersects all the shrunk bits, or the phase closest to the average location of the shrunk bit center, is used as the recovery phase.

Disclosed is a method of data recovery from a data stream, including obtaining data bit samples from the data stream, and locating shrunk bits in the data bit samples. The shrunk bits are analyzed to determine the optimum phase at which to recover the data from the data stream.

Also disclosed is a data recovery circuit including a logic circuit, the logic circuit including a function adapted to obtain data bit samples from a data stream, and a function adapted to locate shrunk bits in the data bit samples. The circuit includes a function adapted to analyze the shrunk bits to determine the optimum phase at which to recover the data from the data stream.

Further disclosed is a Digital Visual Interface (DVI) receiver including a data recovery logic circuit, the logic circuit including a function adapted to obtain data bit samples from a DVI data stream, a function adapted to locate shrunk bits in the data bit samples, and a function adapted to analyze the shrunk bits to determine the optimum phase at which to recover the data from the data stream.

The invention provides a robust data recovery scheme resulting in a low bit error rate. Bit error rates in the order of 1.6 x 10⁻¹¹ have been achieved with the present invention, which exceed the DVI standard requirement of 1 x 10⁻⁹.

### BRIEF DESCRIPTION OF THE DRAWINGS

The above features of the present invention will be more clearly understood from consideration of the following descriptions in connection with accompanying drawings in which:
Figure 1 illustrates a prior art eye diagram for data recovery phase;
Figure 2 shows a prior art phase locked loop (PLL) of a transmitter clock multiplier;
Figure 3 illustrates a timing diagram of the PLL shown in Figure 2, with the output clock signal periods jittering as the voltage on the voltage controlled oscillator ripples;
Figure 4 illustrates a first embodiment of a data recovery apparatus according to the invention that has a shrunk bit counter and a function to compare shrunk bit counts and select the optimum data recovery phase;
Figure 5 illustrates a more detailed view of the embodiment shown in Figure 4;
Figure 6 shows a flow chart for the operation of the first embodiment;
Figure 7 illustrates a second embodiment of the data recovery apparatus according to the invention that has a locate shrunk bit center function and a function to determine the average shrunk bit center position, thus selecting the optimum data recovery phase;
Figure 8 illustrates a more detailed view of the embodiment shown in Figure 7;
Figure 9 shows a flow chart for the operation of the second embodiment; and
Figure 10 shows an eye diagram provided for explanation of the present invention.

Corresponding numerals and symbols in the different figures refer to corresponding parts unless otherwise indicated.

### DETAILED DESCRIPTION OF PREFERRED EMBODIMENTS

First, an explanation of the problem in prior art high speed data transmission recovery techniques will be discussed, followed by a description of the preferred embodiments of the present invention and the advantages thereof.

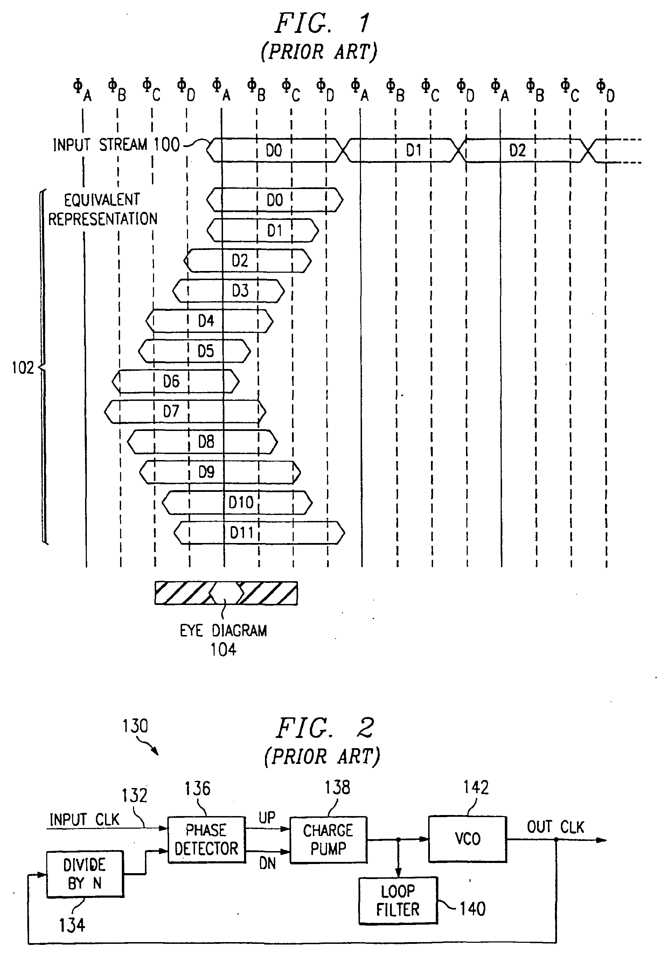

An example of a high speed data transmission eye diagram and recovery phase is shown in the drawing of Figure 1. This diagram would apply to either a prior art system or a system of the present invention. The input stream 100 with bits D0, D1, D2, ... DN is over-sampled by a number, for example, four of clock phases, represented by A, B, C and D. An equivalent representation 102 is generated by placing the waveform of the data bits one below the other so that the timing of the bits D0, D1, D2, ... DN with respect to the clock phases A, B, C, and D remain the same. The start of one bit should occur at the same position as the end of the previous bit with respect to the phases. The eye diagram 104 may be generated by overlaying the waveforms of the equivalent representation for one average bit time. In the example shown, phase A intersects the eye opening (and therefore a valid portion of all bits D0-D11) and should be selected as the phase having samples output as the recovered data, henceforth called the 'recovery phase'. Note that the recovery phase may change slowly with time due to variations in temperature and other factors.

In most cases, a large part of the bit movement is random rather than systematic, due to effects such as clock jitter, resulting in most of the transitions being clustered diagonally opposite to the eye-opening region (e.g. at Phase C in this example of Figure 1). Traditional schemes use this property and first locate the phase closest to the maximum number of transitions. Then, the recovery phase is chosen to be the one farthest from this. Because the calculation and analysis is done every clock (165MHz), with 40 samples, information of only 10 data bits or 10 transitions (on an average) is typically used. For example, the transition counts for the example of Figure 1 are:
No. of transitions between phases A & B = 2 (D5-D6,D6-D7)
No. of transitions between phases B & C = 4 (D3-D4,D4-D5,D7-D8,D8-D9)
No. of transitions between phases C & D = 3 (D1-D2,D2-D3,D9-D10)
No. of transitions between phases D & A = 1 (D0-D1) (Total no. of transitions looked at = 10)
The transition counts to and from each phase are:
Phase A : 2 + 1 = 3
Phase B : 4 + 2 = 6
Phase C : 3 + 4 = 7
Phase D : 1 + 3 = 4

Thus, the maximum of the transition counts is closest to phase C. Therefore, the phase diagonally opposite to phase C, i.e., phase A is used as the recovery phase, in accordance with traditional data recovery phase selection methods.

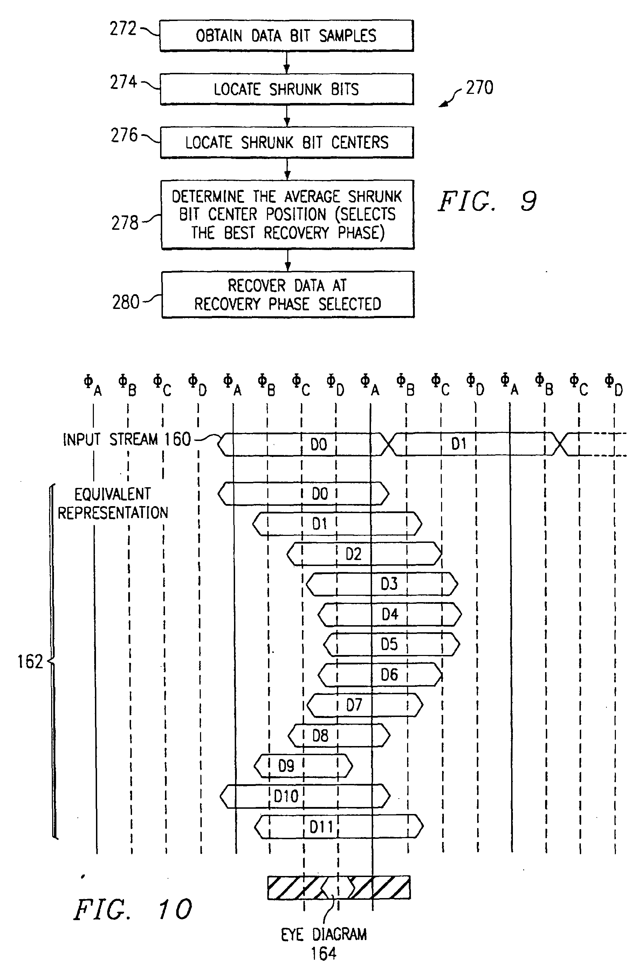

However, in cases where the transitions are more or less evenly spread out between the phases, the conventional scheme cannot choose the recovery phase accurately, resulting in bit errors. This is the case in the example shown in Figure 10, where the transition counts to and from all of the four phases A, B, C, D are equal to four for one word consisting of bits D0 to D9. Using the prior art transitional method, the transition counts are:
No. of transitions between phases A & B = 2 (D0-D1,D8-D9)
No. of transitions between phases B & C = 2 (D1-D2,D7-D8)
No. of transitions between phases C & D = 5 (D2-D3,D3-D4,D4-D5,D5-D6,D6-D7)
No. of transitions between phases D & A = 1 (D9-D10) (Total no. of transitions looked at = 10)
The transition counts to and from each phase are:
Phase A : 2 + 1 = 3
Phase B : 2 + 2 = 4
Phase C : 5 + 2 = 7
Phase D : 1 + 5 = 6
Thus, the maximum of the transition counts is closest to phase C. Therefore, traditional data recovery methods will select phase A (diagonally opposite to phase C) as the recovery phase, which is incorrect, as data bit D9 is not sampled by phase A.

The DVI specification in terms of the eye diagram specifies the region within a bit time where transitions occur, not the frequency of occurrence of the transitions in the closed region of the eye as is assumed by the conventional scheme. So, prior art data recovery schemes, which assume that most transitions occur diagonally opposite to the eye-opening region, are not guaranteed to be bit error free even if the eye opening specification is met.

The present invention solves this problem of the prior art by determining the shrunk bits and analyzing them to determine the correct phase to use to recover the data. In accordance with the data recovery circuit and method described herein, error-free data recovery is achievable when the DVI eye opening specification is met.

Prior to describing the invention, the circuits used inside high-speed transmitters will be described, to facilitate the understanding of the origin of systematic bit movement, shrunk bits and why transition clustering does not always happen.

Transmitters serialize incoming parallel data and output it at a much faster clock rate. A phase locked loop (PLL) or a delay lock loop (DLL) is often used for the clock multiplication.

A typical PLL 130 implementation is shown in Figure 2. A phase detector 136 has an input clock 132 coupled to one input and a divide by N circuit 134 coupled to the other input. Phase detector 136 up/down outputs are coupled to the inputs of charge pump 138. Charge pump 138 output is coupled to loop filter 140 and voltage controlled oscillator (VCO) 142 at a control voltage input. VCO 142 produces an output clock signal "Out_clk" at the output, which output is coupled to the input of divide by N circuit 134. The input clock 132 inputs narrow pulses to the phase detector 136. The up/down outputs of the phase detector 136 also comprise narrow pulses.

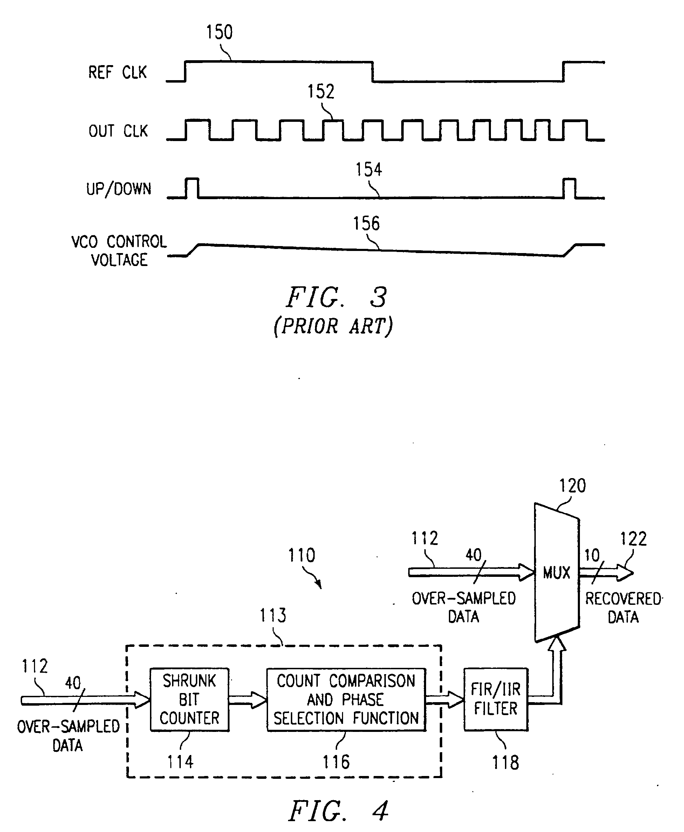

Figure 3 shows the waveforms of the output clock (out_clk 152) produced by the PLL 130 and other signals in PLL 130: ref_clk 150, (input_clk 132), up/down signal 154, and VCO control voltage 156. Due to asymmetries in the charge pump 138 (e.g., the effect of which is that the up and down pulses cannot be made exactly equal) and unequal charge injection of the switches controlling the up/down currents within the charge pump 138, a ripple is seen on the charge pump output, i.e. on the VCO control voltage 156. The VCO control voltage 156 ripple is partially filtered by the loop filter 140, but is not fully eliminated. The frequency of the VCO control voltage 156 ripple is the same as that of the phase detector output 136 pulses, e.g., the input clock signal 132 frequency. The VCO control voltage ripple 156 translates to differences in the bit times of the output clocks within an input clock cycle. This effect is more pronounced when the VCO gain is high.

Due to supply voltages dropping as new process technologies are introduced, the allowable control voltage range also drops, requiring the VCO gain to be higher to support the same output frequency range. For example, in a 1.8V DVI transmitter, the useful control voltage range is around 1 V. To support an output clock frequency range of 250 MHz (in VGA resolution mode) to 1.65 GHz (in UXGA resolution mode), the VCO gain is 1.4 GHz/V or even much higher, to account for process and temperature variations. Thus, the output clock "Out_clk" of PLL 130 has a slowly changing cycle time within one input clock cycle.

The timing of the output serial bits of the transmitter is set by the VCO clocks "Out_clk". Therefore, a change in the cycle period of the VCO clock causes a change in the bit time of the serial data. A similar effect is seen when VCO phases from a delay locked loop (DLL) are used to clock out the data. In addition, mismatches on the output transistors of the transmitter can also cause differences in the bit width. This kind of effects result in systematic variation of the bit time and thus in shrunk and expanded bits and well-distributed transitions in the closed part of the eye diagram.

For the purposes of this specification, the term "shrunk bits" is defined as follows: A bit is shrunk if two adjacent samples of the same phase have the same value, but the value of at least one of the samples between them is different. For example, adjacent samples on phase D (of Figure 1) have values D0 and D2 while samples on phases A,B,C in between these have a value D1. If D0 and D2 have the same value and D1 has the opposite, this shrunk bit can be located (for example, bit-streams 101... and 010... which when sampled, result in over-sampled streams 11110001111... and 00001110000...). However, it is not possible to identify a shrunk bit if adjacent bit values are the same since it is not possible to differentiate this condition from an expanded bit (for example, bit-stream 110... which when sampled, results in over-sampled stream 11111110000...). This should not be a problem since the recovery phase change due to temperature variation and other effects is very slow. Only the bits that are identified as shrunk bits can be used in determining the recovery phase that is not changed until shrunk bits are seen at a different position with respect to the phases.

Referring again to the same example eye diagram shown in Figure 1, the data bits are shown to drift around phase A. The closed part of the eye diagram 104 occurs due to the data movement or drift exhibited in the shape of the equivalent representation 102. It can be seen that in the process of drifting, data bits D1, D3 and D5 are shortened so that they intersect only 3 phases instead of the average of 4 as in D0, D2, and D4. Similarly, expanded data bits D7, D9 and D11 intersect 5 phases. The data drifts because some bits are shrunk and some are expanded.

The present invention utilizes this phenomenon by recognizing that the phase that intersects all the bits is the one that will intersect the eye opening and hence should be used as the recovery phase. If a bit comprises the average number of samples or is expanded, it can be sampled on any phase to recover it accurately. So, only the shrunk (i.e., shortened) bits need to be identified in order to find the best recovery phase. In this manner, the phase that excludes (i.e., does not intersect) the minimum number of shrunk bits (phase A in this example), is the one that the present data recovery circuit and method selects as the recovery phase.

A block diagram of a first embodiment of the present data recovery circuit 110 is shown in Figure 4. The first embodiment uses a 'shrunk bit' exclusion principle to find the phase that best samples the input data. The data recovery circuit 110 may be located in a receiver device in a high speed data transmission system, for example. In a high speed data transmission system, a transmitter (not shown) converts the parallel data to be transferred into high speed serial data. The high speed serialized data stream is over-sampled by the receiver and then converted in to a parallel form using a serial-to-parallel converter (not shown). For example, in a DVI used to transfer data from a PC to a flat panel monitor (such as an LCD monitor), each eight bit parallel data corresponding to a color (red, green or blue) of a pixel along with two bits of extra information (e.g. for transition minimization), incoming at 165 MHz is serialized and transferred at 10 times the rate, i.e 1.65 Gigabits per second. Thus, ten bits of data are transferred in one clock period of the 165MHz clock. Over-sampling the data four times in the receiver and a serial-to-parallel conversion gives 40 samples in every 165 MHz clock period. Since the input stream is sampled with a four phase shifted clock, every fourth sample in the 40 bit bus is obtained by sampling using the same clock phase. An average data bit is four samples long while a shrunk data bit is less than four samples long.

Over-sampled data 112 preferably comprises 40 samples representing an average of 10 bits serially input as a data stream to a logic circuit 113 adapted to locate shrunk bits and analyze them determine the optimum data recovery phase. Logic circuit 113 comprises a shrunk bit counter 114 coupled to a function 116 adapted to compare the shrunk bit counts and select the recovery phase to be used. Logic circuit 113 output is coupled to the input of Finite Impulse Response/Infinite Impulse Response (FIR/IIR) Filter 118. FIR/IIR Filter 118 is coupled to multiplexer (MUX) 120 that is adapted to multiplex the over-sampled data 112 at the input according to the data recovery phase selected and generate recovered data 122 at the output.

Shrunk bit counter 114 is adapted to locate shrunk bits and count the number of shrunk bits excluded by each phase, which may be done in two steps, for example. First, the number of transitions between two consecutive clocks of the same phase is found, looking at a sliding window of five samples (for a 4x over-sampling). Next, a two-transition count is maintained for each of the four phases A, B, C, D, which is incremented if there are two transitions between two consecutive clocks of the phase. This indicates that this phase does not intersect a shrunk bit. In the example shown in Figure 1, the two-transition count for the four phases is:
Count A = 0
Count B = 1 (there are two transitions of D5 between adjacent phase B edges)
Count C = 1 (there are two transitions of D3 between adjacent phase C edges)
Count D = 1 (there are two transitions of D1 between adjacent phase D edges)

The counts are then compared with each other. The phase with the minimum count, which should be zero if the eye diagram is met, is identified as the best phase for the current clock cycle. In this example, phase A is selected. If the minimum count is that of two or more phases, the phase diagonally opposite to that with the maximum count is taken as the minimum count. A best recovery phase is so identified only if at least one shrunk bit is seen in that clock cycle.

FIR/IIR filter 119 preferably comprises a circular spatial filter and is used to filter the best recovery phase so that the response is fast enough to track drifts in the recovery phase due to temperature variations and other factors, but slow enough to not respond to spurious shrunk bits. This in effect stores the previous recovery phase and slowly changes it only when a valid new one is identified. FIR/IIR filter 118 provides an internal storage and a much higher precision but only the most significant part of the value stored is used as the recovery phase in multiplexing out the 10 recovered bits from the 40 samples. The present invention results in error free data recovery when the eye opening specification is met. The present invention effectively recovers the 10 bits from the 40 samples, with a very low error rate.

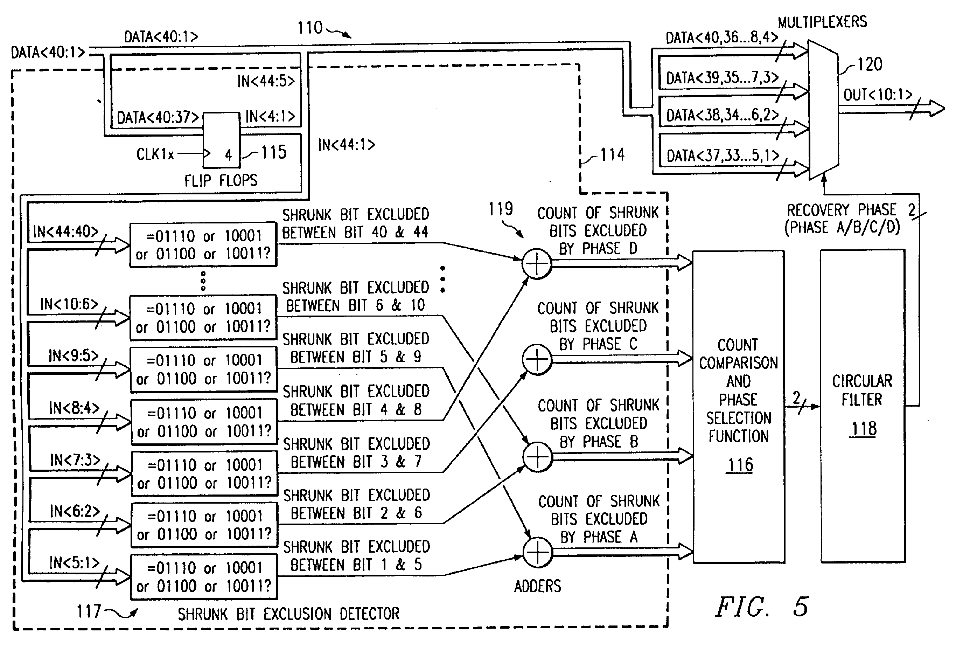

Figure 5 illustrates a more detailed circuit of the embodiment shown in Figure 4. Shrunk bit counter 114 comprises flip flops 115, shrunk bit exclusion detector 117 and adders 119. A plurality of flip flops 115, for example, four, are coupled to the data recovery circuit 110 input. Because a window is used around each input bit, a few extra samples (extra samples = window size - 1, or 5-1 = 4 in the embodiment shown) are used to make use of every sample. Because the input is obtained by sampling followed by a serial-to-parallel conversion, the previous 4 bits in the bit stream are the 4 most significant bits obtained in the previous clock. Therefore, four flip flops 115 are used to store these bits, and a 44 bit bus, IN<44:1> is obtained by concatenating them with the incoming data stream.

Forty-four bit bus IN<44:1> is coupled to the inputs of shrunk data bit exclusion detector 117. Shrunk bit exclusion detector 117 preferably comprises blocks of combinational logic adapted to implement five bit digital comparison. Shrunk bit exclusion detector 117 compares the 44 bit data stream section by section to check for excluded shrunk data bits. Preferably, five samples are used at a time, and the output is asserted if the five samples form a pattern such as 01110, 10001, 01100, 10011, 00110, or 11001. If the eye opening is very small so that a shrunk data bit like 01000 can be formed, this block output should also be asserted if patterns like 01000, 10111, 00100, 11011, 00010 or 11101 are matched.

The outputs of shrunk bit exclusion detector 117 are coupled to the inputs of adders 119 that are used to count the number of shrunk data bits excluded by each phase. The adder for each phase adds the outputs of the shrunk bit exclusion detectors four samples apart, for example.

The outputs of the adders 119 are coupled to the count comparison and phase selection function 116. Count comparison and phase selection function 116 comprises logic circuitry, for example. Function 116 compares the counts corresponding to the four phases with each other and selects the phase with the minimum count. If the minimum count is that of two or more phases, the phase diagonally opposite to that with the maximum count is chosen.

The outputs of count comparison and phase selection function 116 are coupled to the inputs of circular filter 118. Filter 118 is adapted to filter the instantaneous choice of the recovery phase so that the recovery phase input to multiplexers 120 changes only when a continuous trend of a different recovery phase is detected.

Filter 118 ensures that spurious, short-term effects do not cause a change in the selected recovery phase.

The output of filter 118 is coupled to the input of multiplexers 120. Multiplexers 120 multiplexes out from the input over-sampled data using the recovery phase that is selected by the data recovery circuit 110. The recovery phase may change with time. The multiplexer outputs every fourth bit, starting from the bit depending on the recovery phase chosen.

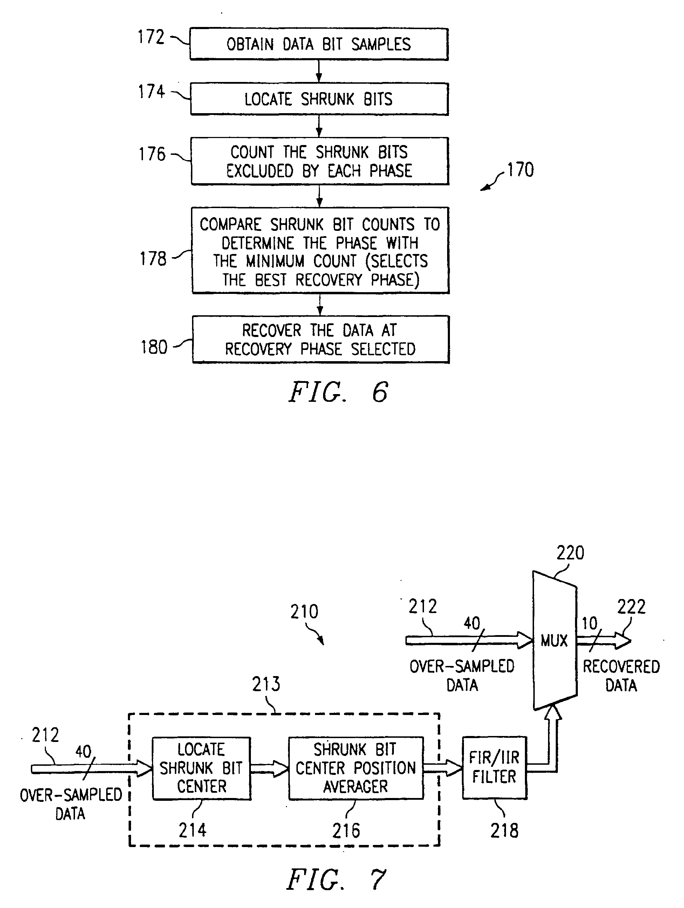

Figure 6 shows a flow chart 170 for implementing the embodiment and circuit shown in Figures 4 and 5. Data bit samples are obtained (step 172), and shrunk bits are located (step 174) in the data stream. The shrunk bits excluded by each phase are counted (step 176). The shrunk bits are compared to one another to determine the phase with the minimum count, which selects the best recovery phase (step 178). The data is then recovered at the recovery phase selected (step 180).

A second embodiment of the present invention is shown at 210 in Figure 7. Over-sampled data 212 preferably comprises 40 samples representing an average of 10 bits serially input as a data stream to a logic circuit 213 adapted to locate shrunk bits and analyze them determine the optimum data recovery phase. Logic circuit 213 comprises a function 214 adapted to locate shrunk bits and locate the centers of the shrunk bits. Function 214 is coupled to a shrunk bit center position averager 216 adapted to determine the average center position for the shrunk bits. Averager 216 is adapted to select the phase having this average center position as the recovery phase to be used. Logic circuit 213 output is coupled to the input of Finite Impulse Response/Infinite Impulse Response (FIR/IIR) Filter 218. FIR/IIR Filter 218 is coupled to multiplexer (MUX) 220 that is adapted to multiplex the over-sampled data 212 at the input according to the data recovery phase selected and generate recovered data 222 at the output.

The centers of shrunk bits are first located. Looking at a sliding window of 5 samples, a sequence 01110 or 10001 indicates a shrunk bit with center at the third location. Similarly, sequence 01100 or 10011 indicates a shrunk bit with the center in between the second and third location, and so on. Thus, eight different center locations are possible. Next, the number of shrunk bit centers is counted for each of the eight possible centers. In the example above, the shrunk bit center count for the eight possible positions is:
Count A = 1 (phase A is the center of shrunk bit D3)
Count AB = 0
Count B = 1 (phase B is the center of shrunk bit D1)
Count BC = 0
Count C = 0
Count CD = 0
Count D = 1 (phase D is the center of shrunk bit D5)
Count DA = 0

Next, FIR/IIR filter 218 which preferably comprises a circular spatial filter is used to filter the best recovery phase so that the response is fast enough to track drifts in the recovery phase due to temperature variations, for example, but slow enough to not respond to spurious shrunk bits. This in effect stores the previous recovery phase and slowly changes it only when a valid new one is identified. The filter 218 provides internal storage that has a much higher precision but only the most significant part of the value stored is used as the recovery phase in multiplexing out the 10 recovered bits from the 40 samples. In this example, circular spatial filtering of the counts will yield a maxima at phase A, as expected.

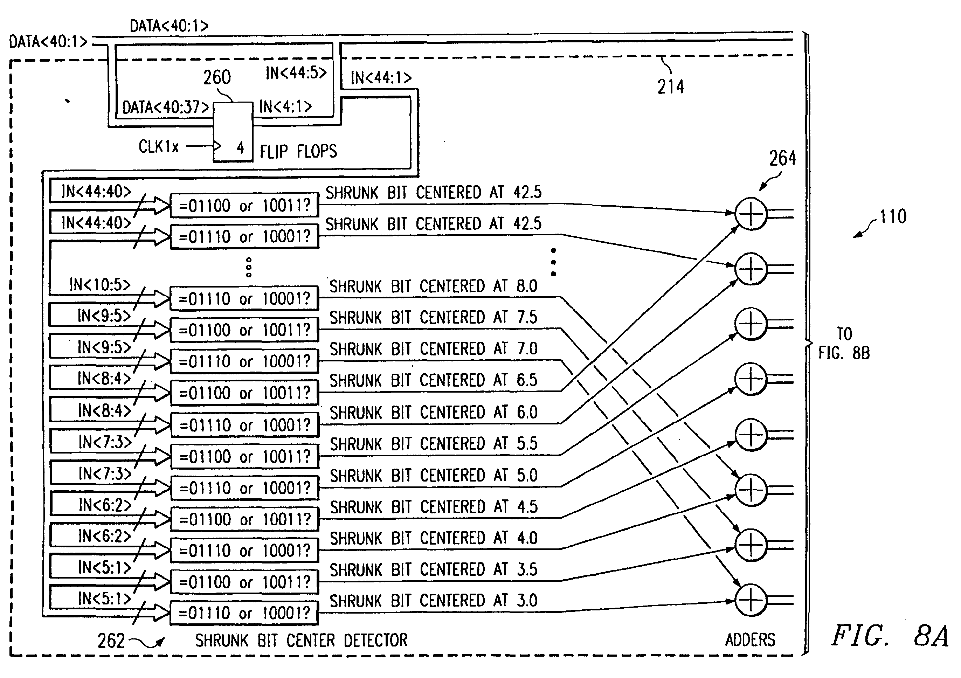

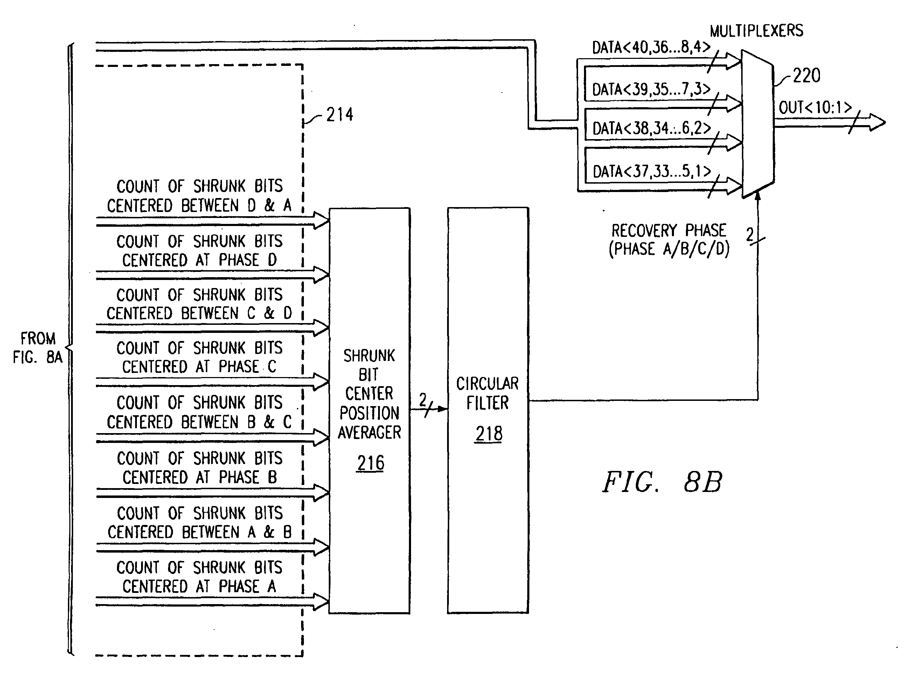

Figure 8 illustrates a more detailed circuit of the embodiment shown in Figure 7. Locate shrunk bit center function 214 comprises flip flops 260, shrunk bit center detector 262 and adders 264. A plurality of flip flops 260, for example, four, are coupled to the data recovery circuit 210 input. Because a window is used around each input bit, a few extra samples (extra samples = window size - 1, or 5-1 = 4 in the embodiment shown) are required to make use of every sample. Because the input is obtained by sampling followed by a serial-to-parallel conversion, the previous four bits in the bit stream are the four most significant bits obtained in the previous clock. Therefore, four flip flops 260 are used to store these bits, and a 44 bit bus, IN<44:1> is obtained by concatenating them with the incoming data stream.

Forty-four bit bus IN<44:1> is coupled to the inputs of shrunk bit center detector 262. Shrunk bit center detector 262 preferably comprises combinational logic adapted to implement five bit digital comparison. Shrunk bit center detector 262 compares the 44 bit data stream section by section to determine for the centers of the shrunk bits. Preferably, five samples are used at a time and the output is asserted if the five samples form patterns, as shown in Figure 8.

The output of shrunk bit center detector 262 is coupled to adders 264 that are adapted to count the number of shrunk bits that having a center at each phase. The center of a shrunk bit may also reside between two phases: therefore, eight adders are preferably used.

The outputs of adders 264 are coupled to the input of the shrunk bit center position averager 216 that is adapted to perform a circular averaging of the counts. The averager 216 selects the phase corresponding to the maximum count.

The outputs of shrunk bit center position averager 216 are coupled to the inputs of circular filter 218. Filter 218 is adapted to filter the instantaneous choice of the recovery phase so that the recovery phase input to multiplexers 220 changes only when a continuous trend of a different recovery phase is detected. Filter 218 ensures that spurious, short-term effects do not cause a change in the selected recovery phase.

The output of filter 218 is coupled to the input of multiplexers 220. Multiplexers 220 multiplex out from the input over-sampled data using the recovery phase that is selected by the data recovery circuit 210. The recovery phase may change with time. The multiplexer outputs every fourth bit, starting from the bit depending on the recovery phase chosen.

Figure 9 illustrates a flow chart 270 for the implementation of the embodiment and circuit shown in Figures 7 and 8. Data bit samples are obtained (step 272), and shrunk bits are located (step 274) in the data stream. The centers of the shrunk bits are located (step 276). The average shrunk bit center position is determined, which selects the best recovery phase (step 278). The optimum phase for data recovery is the phase closest to the position with the maximum averaged count of shrunk bit centers. The data is then recovered at the recovery phase selected (step 280).

The present invention has been implemented and successfully used to recover high speed data from the three channels (one each for red, green and blue data) transmitted as per the DVI. The duration for which the data is valid (eye opening) at the receiver end is very small (specified as 40% of the data bit-time). Clock jitter from the PLL generating the latching clock and the offset of the input stage latching the data further reduce the effective eye opening. The proposed technique has been tested on silicon and gives a bit error rate of 1.6 x 10⁻¹¹ with the input data coming in at 1.65 Gbps and sampled at 6.6 Gbps (4x over-sampling).

Figure 10 illustrates an example of an eye diagram having an input stream 160 shown by equivalent representation 162. In this example, the phase closest to the maximum number of transitions is phase C, as described above. Therefore, conventional data recovery schemes will choose phase A as the recovery phase, which will result in a bit error in the bit D9. The present invention, using either technique described herein, will correctly choose phase D as the data recovery phase, shown in eye diagram 164.

The novel circuit and method disclosed herein achieves technical advantages as a data recovery scheme having low bit error rates. Typical approaches in recovery of data from over-sampled streams find the average location of transitions and output the data sampled by the phase that is farthest from the average transition position. The present invention analyzes only shrunk bits, which are more prone to errors due to use of an incorrect phase used to output the data. This makes the present data recovery circuit and method more robust, with a lower bit error rate recovery than prior art data recovery methods. Bit error rates in the order of 1.6 x 10⁻¹¹ have been achieved with the present invention, which exceed the DVI standard requirement of 1 x 10⁻⁹.

While the invention has been described with reference to illustrative embodiments, this description is not intended to be construed in a limiting sense. Various modifications in combinations of the illustrative embodiments, as well as other embodiments of the invention, will be apparent to persons skilled in the art upon reference to the description. For example, although the present invention is described herein for use with a DVI interface, it may be used in any other application that recovers data from an over-sampled data stream. This technique is particularly useful when the data bit-stream is transition-maximized (for example, using 8b-10b encoding). Very good results were achieved even when the data are transition-minimized (using transition-minimization encoding) in the DVI case, which makes it even more promising for use with a transition-maximized stream.

## Claims

1. A method (170;270) of data recovery from a data stream having a plurality of serial bits, comprising:
sampling the data stream (172;272) at a plurality of different phases to obtain data bit samples, the number of samples being greater than the number of bits;
locating shrunk bits (174;274) in the data bit samples; and
analyzing the shrunk bits (178;278) to determine the optimum phase at which to recover the data from the data stream (180;280).

2. The method according to Claim 1, wherein the step of sampling the data stream comprises sampling the data stream at four different phases so there are four times the number of samples than number of bits.

3. The method according to Claim 2 or Claim 2, wherein the step of sampling the data stream comprises sampling a Digital Visual Interface (DVI) data stream.

4. The method according to any of Claims 1 to 3, wherein the step of analyzing the shrunk bits comprises:
counting the shrunk bits excluded by each phase; and
comparing the shrunk bit (178) counts to determine the phase with the minimum count, the phase with the minimum count being the optimum phase for data recovery.

5. The method according to any of Claims 1 to 3, wherein the step of analyzing the shrunk bits comprises:
locating center positions of the shrunk bits (278); and
averaging the shrunk bit center positions to determine the optimum phase, wherein the phase closest to the position with the maximum averaged count of shrunk bit centers is the optimum phase for data recovery.

6. The method according to any preceding Claim further comprising:
filtering the selected phase.

7. The method according to Claim 6 further comprising:
multiplexing the data stream with the filtered selected phase to recover the data.

8. A logic circuit (110;210) for a data recovery circuit (110;210) comprising:
sampling means (114;214) for sampling a data stream having a plurality of serial bits, wherein the sampling is at a plurality of different phases to obtain data bit samples, the number of samples being greater than the number of bits;
locating means (116;216) for locating shrunk bits in the data bit samples; and
analyzing means (116;216) for analyzing the shrunk bits to determine the optimum phase at which to recover the data from the data stream.

9. The logic circuit according to Claim 8, wherein the sampling means is capable of sampling the data stream at four different phases so that there are four times the number of samples than number of bits.

10. The logic circuit according to Claim 9, wherein the sampling means is capable of sampling a data stream that comprises a Digital Visual Interface (DVI) data stream.

11. The logic circuit according to any of Claims 8 to 10, wherein the analyzing means is capable of counting the shrunk bits (116;117;119) excluded by each phase and comparing the shrunk bit counts to determine the phase with the minimum count, the phase with the minimum count being the optimum phase for data recovery.

12. The logic circuit according to any of Claims 8 to 10, wherein analyzing means is capable of locating center positions of the shrunk bits (216;262;264) and averaging the shrunk bit center positions to determine the optimum phase, wherein the phase closest to the position with the maximum averaged count of shrunk bit centers is the optimum phase for data recovery.

13. The logic circuit according to any of Claims 8 to 12 further comprising:
a filter (118;218) coupled to the logic circuit for filtering the selected phase.

14. The logic circuit according to Claim 13 further comprising:
a multiplexer (120;220) coupled to the data stream and the filtered selected phase, the multiplexer capable of recovering the data.

15. A Digital Visual Interface (DVI) receiver including a data recovery logic circuit (110;210), which logic circuit comprising:
sampling means (114;214) for sampling a data stream having a plurality of serial bits, wherein the sampling is at a plurality of different phases to obtain data bit samples, the number of samples being greater than the number of bits;
locating means (116;216) for locating shrunk bits in the data bit samples; and
analyzing means (116;216) for analyzing the shrunk bits to determine the optimum phase at which to recover the data from the data stream.

16. The DVI receiver according to Claim 15, wherein the sampling means is capable of sampling the data stream at four different phases so there are four times the number of samples than number of bits.

17. The DVI receiver according to Claim 15 or Claim 16, wherein analyzing means (116;117;119) is capable of counting the shrunk bits excluded by each phase and compare the shrunk bit counts to determine the phase with the minimum count, the phase with the minimum count being the optimum phase for data recovery.

18. The DVI receiver according to any of Claims 15 to 16, wherein the analyzing means (216;262;264) is capable of locating center positions of the shrunk bits and averaging the shrunk bit center positions to determine the optimum phase, wherein the phase closest to the position with the maximum averaged count of shrunk bit centers is the optimum phase for data recovery.

19. The DVI receiver according to Claim 16 further comprising:
a filter (118;18) coupled to the logic circuit for filtering the selected phase; and
a multiplexer (120;220) coupled to the data stream and the filtered selected phase, the multiplexer adapted to recover the data.

20. A data recovery circuit (110;210) for recovering data from a data stream having a plurality of serial bits, the data recovery circuit comprising:
means for sampling (114;214) the data stream at a plurality of different phases to obtain data bit samples, the number of samples being greater than the number of bits;
means for locating shrunk bits (116;216) in the data bit samples; and
means for analyzing (116;216) the shrunk bits to determine the optimum phase at which to recover the data from the data stream.

21. The data recovery circuit according to Claim 20, wherein the shrunk bit analyzing means (116;117;119) is adapted to count the shrunk bits excluded by each phase and compare the shrunk bit counts to determine the phase with the minimum count, the phase with the minimum count being the optimum phase for data recovery.

22. The data recovery circuit according to Claim 20 or Claim 21, wherein the shrunk bit analyzing means (216;262;264) is adapted to locate center positions of the shrunk bits and average the shrunk bit center positions to determine the optimum phase, wherein the phase closest to the position with the maximum averaged count of shrunk bit centers is the optimum phase for data recovery.
